# EUROPÄISCHE PATENTANMELDUNG

(11) **EP 3 881 660 A1**
(43) Veröffentlichungstag der Anmeldung: **22.09.2021**
(21) Anmeldenummer: 20401021.9
(22) Anmeldetag: 20.03.2020
(51) Int. Cl.: A01C 15/04, A01C 21/00

(54) **LANDWIRTSCHAFTLICHE VERTEILEINRICHTUNG**

(71) Anmelder: Amazonen-Werke H. Dreyer SE & Co. KG, 49205 Hasbergen (DE)
(72) Erfinder: Austermann, Stefan, 48291 Telgte (DE); Dreyer, Justus, 49078 Osnabrück (DE); Ehlen, Volker, 49205 Hasbergen (DE); Johannaber, Stefan Jan, 49536 Lienen (DE); Kiefer, Stefan, 49074 Osnabrück (DE); Holtkötter, Christian, 33775 Versmold (DE); Klemann, Timo, 49191 Belm (DE); Hilbert, Florenz, 48282 Emsdetten (DE)

(57) **Zusammenfassung**

Die Erfindung betrifft eine landwirtschaftliche Verteileinrichtung (10), insbesondere einen Pneumatikstreuer, mit mehreren Ausbringelementen (14a-14k), welche an einem Verteilgestänge (12) angeordnet und dazu eingerichtet sind, granulares Material auf eine landwirtschaftliche Nutzfläche (24) auszubringen, einer Erfassungseinrichtung (16), welche dazu eingerichtet ist, Pflanzenreihen (26a-26k) auf der landwirtschaftlichen Nutzfläche zu erfassen, einer Verstelleinrichtung (20), mittels welcher der Auftreffbereich (AB) des von einer oder mehreren Ausbringelementen abgegebenen granularen Materials auf der landwirtschaftlichen Nutzfläche während des Ausbringvorgangs veränderbar ist und einer Steuerungseinrichtung, welche dazu eingerichtet ist, die Verstelleinrichtung in Abhängigkeit der durch die Erfassungseinrichtung erfassten Pflanzenreihen auf der landwirtschaftlichen Nutzfläche während des Ausbringvorgangs zu steuern.

## Beschreibung

Die Erfindung betrifft ein landwirtschaftliche Verteileinrichtung nach dem Oberbegriff des Patentanspruchs 1 und ein Verfahren zum Ausbringen von granularen Material nach dem Oberbegriff des Patentanspruchs 12.

Bei der Ausbringung von granularen Material auf eine landwirtschaftliche Nutzfläche ist es von Vorteil, wenn das granulare Material in die unmittelbare Umgebung der jeweiligen Pflanzen auf der landwirtschaftlichen Nutzfläche abgegeben wird. Da die Aussaat einer Vielzahl von landwirtschaftlichen Nutzpflanzen entlang von Saatreihen erfolgt, bilden sich auf der landwirtschaftlichen Nutzfläche während der Wachstumswachse der Nutzpflanzen Pflanzenreihen aus.

Eine besonders effektive und wirksame Ausbringung von granularen Material kann also dadurch erreicht werden, dass die Materialausbringung reihenbezogen erfolgt, sodass das granulare Material im Wesentlichen entlang von Ausbringstreifen ausgebracht wird, wobei die Ausbringstreifen entlang von Pflanzenreihen verlaufen.

Im Stand der Technik sind bereits Methoden bekannt, mit welchen Pflanzenreihen auf landwirtschaftlichen Nutzflächen erfasst werden können. Ein entsprechendes Verfahren ist beispielsweise aus der Druckschrift DE 196 42 439 C1 bekannt.

Bei der Ausbringung von granularen Material ist jedoch zu berücksichtigen, dass die Arbeitsbreite von Verteilgestängen gattungsgemäßer Verteileinrichtungen, wie Pneumatikstreuern, üblicherweise die Arbeitsbreite von Sämaschinen um ein Vielfaches übersteigt und dass es bei der Saatgutausbringung aufgrund von unpräzisen Anschlussfahrten zu unregelmäßigen Abständen der einzelnen Saatgutreihen zueinander kommt. Die sich ergebenden Pflanzenreihen verlaufen somit üblicherweise zwar im Wesentlichen parallel zueinander, wobei der Abstand einzelner Pflanzenreihen zueinander variieren kann. Mit den im Stand der Technik bekannten starren Ausbringelement-Anordnungen kann keine geeignete Anpassung an den Pflanzenreihenversatz umgesetzt werden. Die pflanzenreihenbezogene Materialausbringung erfolgt somit vergleichsweise unpräzise, sodass die Wirkung des ausgebrachten granularen Materials nicht selten erheblich beeinträchtigt wird.

Die der Erfindung zugrundeliegende Aufgabe besteht somit darin, die Präzision bei der reihenbezogenen Ausbringung von granularen Material zu verbessern.

Die Aufgabe wird gelöst durch eine landwirtschaftliche Verteileinrichtung der eingangs genannten Art, wobei die erfindungsgemäße landwirtschaftliche Verteileinrichtung eine Steuerungseinrichtung aufweist, welche dazu eingerichtet ist, die Verstelleinrichtung in Abhängigkeit der durch die Erfassungseinrichtung erfassten Pflanzenreihen auf der landwirtschaftlichen Nutzfläche während des Ausbringvorgangs zu steuern.

Die Erfindung macht sich die Erkenntnis zunutze, dass durch die Steuerung der Verstelleinrichtung in Abhängigkeit der durch die Erfassungseinrichtung erfassten Pflanzenreihen der Auftreffbereich eines Ausbringelements oder die Auftreffbereiche von mehreren Ausbringelementen an Unregelmäßigkeiten in der Beabstandung der Pflanzenreihen angepasst werden können. Somit kann eine präzise reihenbezogene Ausbringung von granularen Material erfolgen, auch wenn benachbarte Pflanzenreihen auf der landwirtschaftlichen Nutzfläche teilweise unterschiedliche Abstände voneinander aufweisen. Ein Ausbringelement kann als Verteildüse, Prallteller, Leitvorrichtung, Weiche, Schleuderteller und/oder dergleichen ausgebildet sind. Insbesondere können alle Ausbringelemente gleichartig ausgebildet sein.

Die Steuerungseinrichtung kann dazu eingerichtet sein, die Verstelleinrichtung derart zu steuern, dass die Auftreffbereiche des von einer oder mehreren Ausbringelementen abgegebenen granularen Materials in den Pflanzenreihen aufweisenden Reihenbereichen der landwirtschaftlichen Nutzfläche liegen. Alternativ oder zusätzlich kann die Steuerungseinrichtung dazu eingerichtet sein, die Verstelleinrichtung derart zu steuern, dass die Auftreffbereiche des von einer oder mehreren Ausbringelementen abgegebenen granularen Materials in Zwischenbereichen liegen, welche zwischen benachbarten Pflanzenreihen verlaufen. Somit kann granulares Material gezielt auf die Reihenbereiche und/oder die zwischen den Reihenbereichen verlaufenden Zwischenbereiche ausgebracht werden.

In einer bevorzugten Ausführungsform der erfindungsgemäßen landwirtschaftlichen Verteileinrichtung weist die Verstelleinrichtung eine oder mehrere Positioniereinrichtungen auf, mittels welchen jeweils die Position von einem oder mehreren Ausbringelementen an dem Verteilgestänge veränderbar ist. Vorzugsweise ist mittels mehrerer Positioniereinrichtungen eine Einzelpositionierung von einzelnen Ausbringelementen umsetzbar. Vorzugsweise sind sämtliche Ausbringelemente jeweils mittels einer Positioniereinrichtung unabhängig von anderen Ausbringelementen positionierbar. Alternativ oder zusätzlich kann eine Gruppenpositionierung von mehreren Ausbringelementen erfolgen, wobei im Rahmen einer Gruppenpositionierung eine Gruppe von Ausbringelementen gleichzeitig positionierbar ist. Mittels der Positioniereinrichtungen ist vorzugsweise eine Positionsveränderung von einem oder mehreren Ausbringelementen entlang des Verteilgestänges der landwirtschaftlichen Verteileinrichtung, also quer zur Fahrtrichtung der landwirtschaftlichen Verteileinrichtung, umsetzbar. Alternativ oder zusätzlich kann mittels einer Positioniereinrichtung auch das gesamte Verteilgestänge samt den an dem Verteilgestänge angeordneten Ausbringelementen bewegt werden.

Darüber hinaus ist eine erfindungsgemäße landwirtschaftliche Verteileinrichtung vorteilhaft, bei welchem die eine oder die mehreren Positioniereinrichtungen jeweils einen Verschiebemechanismus aufweisen, mittels welchem das eine oder die mehreren Ausbringelemente entlang des Verteilgestänges verschiebbar sind. Insbesondere können die jeweiligen Schiebemechanismen eine Verstellschiene aufweisen, welche sich über einen Teilabschnitt des Verteilgestänges quer zur Fahrtrichtung der landwirtschaftlichen Verteileinrichtung erstreckt. Vorzugsweise ist ein oder sind mehrere Ausbringelemente an den jeweiligen Verstellschienen befestigt und entlang der Verstellschienen verschiebbar.

In einer anderen Ausführungsform der erfindungsgemäßen landwirtschaftlichen Verteileinrichtung ist die Steuerungseinrichtung dazu eingerichtet, die eine oder die mehreren Positioniereinrichtungen derart zu steuern, dass einzelne oder mehrere Ausbringelemente während des Ausbringvorgangs jeweils im Wesentlichen vertikal oberhalb einer Pflanzenreihe positioniert sind. Durch die Positionierung einzelner oder mehrerer Ausbringelemente vertikal oberhalb einer Pflanzenreihe kann eine reihenbezogene Ausbringung von granularen Material besonders präzise erfolgen, um eine besonders effektive Versorgung der Nutzpflanzen mit granularen Material zu bewerkstelligen. Alternativ oder zusätzlich kann die Steuerungseinrichtung dazu eingerichtet sein, die eine oder die mehreren Positioniereinrichtungen derart zu steuern, dass einzelne oder mehrere Ausbringelemente während des Ausbringvorgangs jeweils oberhalb und im Wesentlichen mittig zwischen zwei Pflanzenreihen positioniert sind. Durch die Positionierung von einzelnen oder mehreren Ausbringelementen oberhalb und im Wesentlichen mittig zwischen zwei Pflanzenreihen kann eine präzise Ausbringung von granularen Material auf die Zwischenbereiche zwischen den Pflanzenreihen umgesetzt werden. In diesen Zwischenbereichen kann granulares Material, was eher zur Steigerung der Bodenqualität als zur Unterstützung der Nutzpflanzen vorgesehen ist, ausgebracht werden.

Außerdem ist eine erfindungsgemäße landwirtschaftliche Verteileinrichtung vorteilhaft, bei welchem die Steuerungseinrichtung dazu eingerichtet ist, die Verstelleinrichtung derart zu steuern, dass der mittlere Abstand in horizontaler Richtung zwischen den erfassten Pflanzenreihen und den den Pflanzenreihen jeweils zugeordneten Ausbringelementen minimal ist. Insbesondere, wenn die eine oder die mehreren Positioniereinrichtungen keine exakte Positionierung sämtlicher Ausbringelemente oberhalb der Pflanzenreihen erlauben, wird auf diese Weise trotzdem ein akzeptabler Reihenbezug hergestellt. Beispielsweise umfasst die landwirtschaftliche Verteileinrichtung mehrere Gruppen von Ausbringelementen, wobei die einzelnen Gruppen von Ausbringelementen entlang des Verteilgestänges und somit quer zur Fahrtrichtung der landwirtschaftlichen Verteileinrichtung verschiebbar sind. Da die Relativposition einzelner Ausbringelemente einer Gruppe von Ausbringelementen nicht veränderbar ist, ist die exakte Positionierung sämtlicher Ausbringelemente oberhalb einer Pflanzenreihe häufig nicht möglich. Die einzelnen Gruppen von Ausbringelementen werden in diesem Fall derart positioniert, dass der mittlere Abstand in horizontaler Richtung zwischen den erfassten Pflanzenreihen und den den Pflanzenreihen jeweils zugeordneten Ausbringelementen minimal ist. Vorzugsweise ist die Steuerungseinrichtung dazu eingerichtet, eine entsprechende Position für die jeweiligen Gruppen von Ausbringelementen unter Berücksichtigung der Verstellmöglichkeiten und der Relativpositionierung einzelner Ausbringelemente einer Gruppe zueinander zu berechnen.

In einer weiteren Ausführungsform der erfindungsgemäßen landwirtschaftlichen Verteileinrichtung weist die Verstelleinrichtung eine oder mehrere Schwenkeinrichtungen auf, mittels welchen jeweils die Neigung von einem oder mehreren Ausbringelementen an dem Verteilgestänge veränderbar ist. Durch die eine oder die mehreren Schwenkeinrichtungen kann eine Neigungsanpassung von einzelnen Ausbringelementen erfolgen, beispielsweise derart, dass einzelne Ausbringelemente auf erfasste Pflanzenreihen auf der landwirtschaftlichen Nutzfläche ausgerichtet sind. Alternativ oder zusätzlich kann die Neigungsanpassung auch derart erfolgen, dass Ausbringelemente auf Zwischenbereiche zwischen benachbarten Pflanzenreihen ausgerichtet sind. Ferner kann die eine oder können die mehreren Schwenkeinrichtungen auch dazu eingerichtet sein, die Neigung einer Gruppe von Ausbringelementen anzupassen. Beispielsweise ist eine Gruppe von mehreren Ausbringelementen an einer Trägerstruktur angeordnet, wobei die jeweiligen Schwenkeinrichtungen dazu eingerichtet sind, die Neigung einer Trägerstruktur zu verändern.

Außerdem ist eine erfindungsgemäße landwirtschaftliche Verteileinrichtung vorteilhaft, bei welcher die Steuerungseinrichtung dazu eingerichtet ist, die eine oder die mehreren Schwenkeinrichtungen derart zu steuern, dass einzelne oder mehrere Ausbringelemente während des Ausbringvorgangs jeweils im Wesentlichen auf eine Pflanzenreihe ausgerichtet sind. Alternativ oder zusätzlich kann die Steuerungseinrichtung dazu eingerichtet sein, die eine oder die mehreren Schwenkeinrichtungen derart zu steuern, dass einzelne oder mehrere Ausbringelemente während des Ausbringvorgangs jeweils auf einen Bereich zwischen zwei Pflanzenreihen ausgerichtet sind. Die eine oder die mehreren Schwenkeinrichtungen können zusätzlich oder alternativ zu der einen oder den mehreren Positioniereinrichtungen vorliegen.

Darüber hinaus ist eine erfindungsgemäße landwirtschaftliche Verteileinrichtung bevorzugt, bei welcher die Verstelleinrichtung ein oder mehrere Verdreheinrichtungen aufweist, mittels welchen die Drehausrichtung von einem oder mehreren Ausbringelementen an dem Verteilgestänge veränderbar ist.

Vorzugsweise ist die eine oder sind die mehreren Dreheinrichtungen dazu eingerichtet, ein oder mehrere Ausbringelemente um die eigene Hochachse zu verdrehen. Insbesondere, wenn Ausbringelemente kein fächerförmiges Verteilmuster erzeugen, sondern eine gerichtete Materialausbringung umsetzen, kann durch eine Verdrehung der Ausbringelemente um die Hochachse die Ausbringung des granularen Materials angepasst werden. Beispielsweise lässt sich durch ein Verdrehen von Ausbringelementen um die eigene Hochachse die Streubreite im Auftreffbereich des granularen Materials verändern.

In einer alternativen Ausführungsform der erfindungsgemäßen landwirtschaftlichen Verteileinrichtung weist diese mehrere mit dem Verteilgestänge verbundene Trägerstrukturen auf, wobei an den Trägerstrukturen jeweils mehrere Ausbringelemente befestigt sind und die Position und/oder Neigung der Trägerstrukturen mittels der Verstelleinrichtung veränderbar ist. Wenn die Ausbringelemente als Verteildüsen ausgebildet sind, können die Trägerstrukturen Düsenträgereinheiten sein. An entsprechenden Düsenträgereinheiten sind mehrere als Verteildüsen ausgebildete Ausbringelemente befestigt bzw. angeordnet. Die Ausbringelemente können beweglich oder unbeweglich an den jeweiligen Trägerstrukturen befestigt sein. Wenn die Ausbringelemente unbeweglich an den Trägerstrukturen befestigt sind, kann die Relativposition und/oder die Relativ-Neigung der Ausbringelemente einer Trägerstruktur zueinander nicht verändert werden. Wenn die Ausbringelemente beweglich an der Trägerstruktur befestigt sind, kann die Relativposition und/oder die Relativ-Neigung der Ausbringelemente einer Trägerstruktur zueinander verändert werden.

Bevorzugt ist außerdem eine erfindungsgemäße landwirtschaftliche Verteileinrichtung, bei welcher mittels der Verstelleinrichtung das Verteilmuster von einer oder mehreren Ausbringelementen veränderbar ist. Beispielsweise umfasst die Verstelleinrichtung unterschiedliche Stellungen einer weichenartigen Leitvorrichtung, wobei die unterschiedlichen Stellungen der Leitvorrichtung zur Erzeugung unterschiedlicher Verteilmuster führen. Beispielsweise kann die Verstelleinrichtung auch Ausbringmengen-Steuereinheiten, beispielsweisen Ventile, aufweisen, mittels welchen die den Ausbringelementen bereitgestellte Materialmenge einstellbar bzw. steuerbar ist. Alternativ oder zusätzlich kann die Verstelleinrichtung auf die Formgebung von als Prallteller und/oder Leitvorrichtung ausgebildeten Ausbringelementen einwirken, so dass ein angepasstes Verteilmuster von diesen Ausbringelementen erzeugt wird.

Es ist außerdem eine erfindungsgemäße landwirtschaftliche Verteileinrichtung vorteilhaft, bei welchem die Erfassungseinrichtung einen oder mehrere Sensoren und/oder eine oder mehrere Kameras zum Erfassen von Pflanzenreihen umfasst. Der eine oder die mehreren Sensoren und/oder die eine oder die mehreren Kameras sind vorzugsweise an dem Verteilgestänge der landwirtschaftlichen Verteileinrichtung angeordnet und/oder befestigt. Insbesondere weist die Steuerungseinrichtung eine Auswerteeinheit auf, welche auf Grundlage der Signale des einen oder der mehreren Sensoren und/oder der Signale der einen oder der mehreren Kameras die Präsenz, die Position und/oder den Verlauf von Pflanzenreihen erfasst.

Die der Erfindung zugrundeliegende Aufgabe wird ferner durch ein Verfahren der eingangs genannten Art gelöst, wobei im Rahmen des erfindungsgemäßen Verfahrens die Verstelleinrichtung in Abhängigkeit der durch die Erfassungseinrichtung erfassten Pflanzenreihen auf der landwirtschaftlichen Nutzfläche während des Ausbringvorgangs gesteuert wird. Das granulare Material kann gekörntes oder pulverförmigerPflanzen- bzw. Bodennährstoff und/oder Schädlingsbekämpfungsmittel, wie Schneckenkorn sein bzw. Pflanzen- bzw. Bodennährstoff und/oder Schädlingsbekämpfungsmittel umfassen. Vorzugsweise wird das erfindungsgemäße Verfahren zum Ausbringen von granularen Material mit einer landwirtschaftlichen Verteileinrichtung nach einer der vorstehend beschriebenen Ausführungsformen ausgeführt.

In einer bevorzugten Ausführungsform des erfindungsgemäßen Verfahrens umfasst das Verändern des Auftreffbereichs des von einer oder mehreren Ausbringelementen abgegebenen granularen Materials auf die landwirtschaftliche Nutzfläche während des Ausbringvorgangs das Verändern der Position von einem oder mehreren Ausbringelementen an dem Verteilgestänge und/oder das Verändern der Neigung von einem oder mehreren Ausbringelementen an dem Verteilgestänge. Alternativ oder zusätzlich umfasst das Verändern des Auftreffbereichs des von einer oder mehreren Ausbringelementen abgegebenen granularen Materials auf die landwirtschaftliche Nutzfläche während des Ausbringvorgangs das Verändern der Drehausrichtung von einem oder mehreren Ausbringelementen an dem Verteilgestänge und/oder das Verändern des Verteilmusters von einem oder mehreren Ausbringelementen. Das Verändern der Position kann ein Verschieben von einem oder mehreren Ausbringelementen, insbesondere entlang des Verteilgestänges und/oder quer zur Fahrtrichtung der landwirtschaftlichen Verteileinrichtung, umfassen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Verteilgestänge einer erfindungsgemäßen landwirtschaftlichen Verteileinrichtung in einer schematischen Darstellung;
- Fig. 2: ein Verteilgestänge einer anderen erfindungsgemäßen landwirtschaftlichen Verteileinrichtung in einer schematischen Darstellung; und
- Fig. 3: ein Verteilgestänge einer weiteren erfindungsgemäßen landwirtschaftlichen Verteileinrichtung in einer schematischen Darstellung.

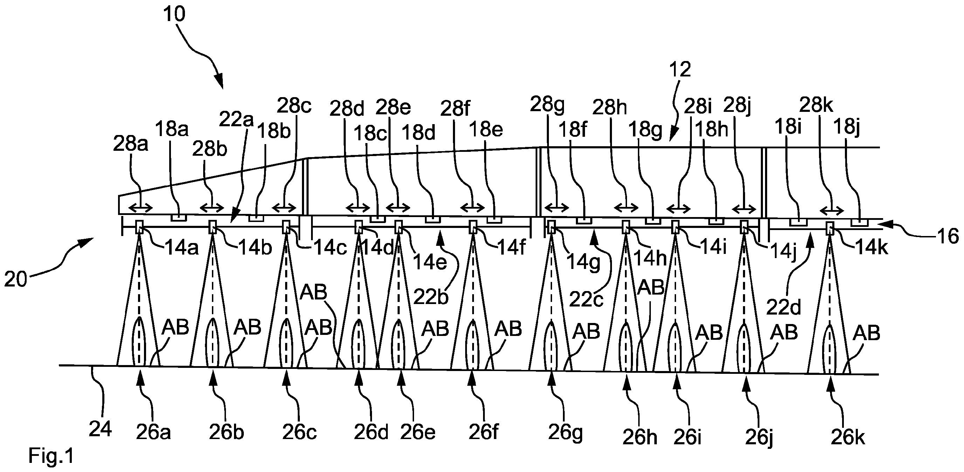

Die Fig. 1 zeigt ein Verteilgestänge 12 einer landwirtschaftlichen Verteileinrichtung 10, wobei die landwirtschaftliche Verteileinrichtung 10 als Pneumatikstreuer ausgebildet ist. Das Verteilgestänge 12 weist mehrere zueinander verschwenkbare Gestängesegmente auf, welche ein Zusammenklappen des Verteilgestänges 12 erlauben. Der dargestellte Ausschnitt des Verteilgestänges 12 zeigt eine linke Gestängehälfte, wobei das Verteilgestänge 12 ebenfalls eine rechte Gestängehälfte aufweist.

An dem Verteilgestänge 12 sind mehrere Ausbringelemente 14a-14k angeordnet, wobei die Ausbringelemente 14a-14k als Verteildüsen ausgebildet sind. Die Ausbringelemente 14a-14k dienen zum Ausbringen des granularen Materials auf die landwirtschaftliche Nutzfläche 24.

Ferner umfasst die landwirtschaftliche Verteileinrichtung 10 eine Erfassungseinrichtung 16, welche zum Erfassen von Pflanzenreihen 26a-26k auf der landwirtschaftlichen Nutzfläche 24 dient. Die Erfassungseinrichtung 16 umfasst mehrere an dem Verteilgestänge 12 befestigte Kameras 18a-18j.

Darüber hinaus umfasst die landwirtschaftliche Verteileinrichtung 10 eine Verstelleinrichtung 20, mittels welcher der Auftreffbereich AB des von den Ausbringelementen 14a-14k abgegebenen granularen Materials auf der landwirtschaftlichen Nutzfläche 24 während des Ausbringvorgangs veränderbar ist.

Die Ausbringelemente 14a-14k, die Kameras 18a-18j der Erfassungseinrichtung 16 und die Verstelleinrichtung 20 sind mit einer Steuerungseinrichtung verbunden, welche die Verstelleinrichtung 20 in Abhängigkeit der durch die Erfassungseinrichtung 16 erfassten Pflanzenreihen 26a-26k auf der landwirtschaftlichen Nutzfläche 24 während des Ausbringvorgangs steuert.

Die Verstelleinrichtung 20 weist mehrere Positioniereinrichtungen 22a-22d auf, mittels welchen die Position der Ausbringelemente 14a-14k an dem Verteilgestänge 12 veränderbar ist. Die Positioniereinrichtungen 20a-20d weisen jeweils einen Verschiebemechanismus auf, mittels welchem mehrere Ausbringelemente 14a-14k entlang des Verteilgestänges 12 und somit quer zur Fahrtrichtung der landwirtschaftlichen Verteileinrichtung 10 verschiebbar sind. Der Verschiebemechanismus der jeweiligen Positioniereinrichtungen 22a-22d erlaubt eine Einzelpositionierung der jeweiligen Ausbringelemente 14a-14k. Die Ausbringelemente 14a-14k können dabei unabhängig voneinander in die dargestellten Verstellrichtungen 28a-28k bewegt werden. Zum Bewegen der Ausbringelemente 14a-14k weisen die Positioniereinrichtungen 22a-22d entsprechende Aktoren auf. Die Aktoren können elektrische, pneumatische oder hydraulische Aktoren sein. Die Ausbringelemente 14a-14k werden über nicht dargestellte Zubringleitungen mit granularen Material versorgt, wobei die Zubringleitungen in ihrer Länge veränderbar gestaltet sind, um eine Verschiebung der Ausbringelemente 14a-14k zuzulassen. Hierzu können die Zubringleitungen flexibel, teleskopierbar und/oder anderweitig längenveränderbar, beispielsweise durch Vorsehen eines Ausgleichszubringleitungselementes, gestaltet sein.

Mittels der Steuerungseinrichtung können die Positioniereinrichtungen 22a-22d derart angesteuert werden, dass die Ausbringelemente 14a-14k während des Ausbringvorgangs jeweils im Wesentlichen vertikal oberhalb einer Pflanzenreihe 26a-26k positioniert sind. Dies erlaubt eine präzise reihenbezogene Ausbringung des granularen Materials auf die landwirtschaftliche Nutzfläche 24.

Alternativ oder zusätzlich zu der dargestellten Steuerung der Positioniereinrichtungen 22a-22d kann diese auch derart gesteuert werden, dass die Ausbringelemente 14a-14k während des Ausbringvorgangs jeweils oberhalb und im Wesentlichen mittig zwischen zwei Pflanzenreihen 26a-26k positioniert sind.

Ferner kann mittels der Verstelleinrichtung auch das Verteilmuster der Ausbringelemente 14a-14k angepasst werden. Die Verstelleinrichtung 20 kann hierzu verstellbare oder auswechselbare Düsenaufsätze aufweisen, welche in Abhängigkeit der Position bzw. des Verlaufs der erfassten Pflanzenreihen 26a-26k an den jeweiligen Ausbringelementen 14a-14k eingestellt werden können. Alternativ oder zusätzlich können formveränderliche Prallteller als Ausbringelemente 14a-14k eingesetzt werden. Ferner ist denkbar, dass als Schleuderteller ausgebildete Ausbringelemente 14a-14k eingesetzt werden, deren Verteilmuster beispielsweise über die Drehzahl und/oder den Aufgabepunkt des granularen Materials auf den Schleuderteller beeinflussbar ist.

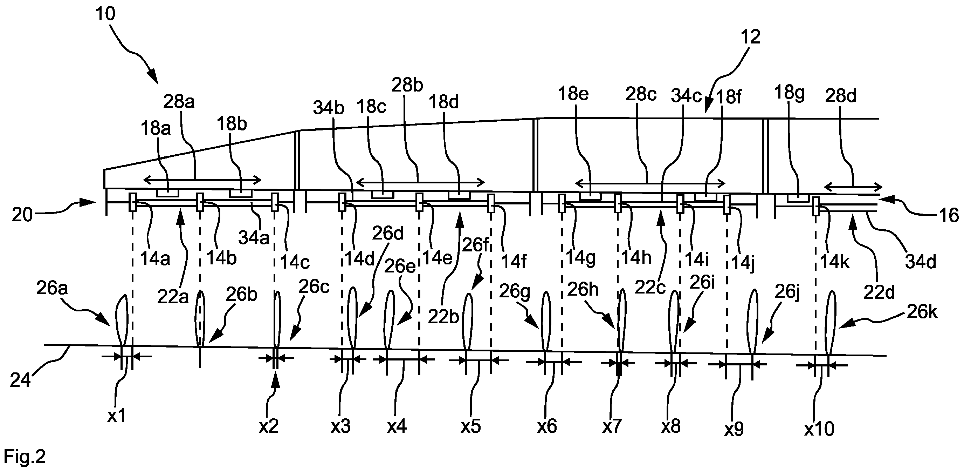

Die Fig. 2 zeigt ebenfalls ein Verteilgestänge 12 einer als Pneumatikstreuer ausgebildeten landwirtschaftlichen Verteileinrichtung 10. Anders als die Verstelleinrichtung 20 der in der Fig. 1 dargestellten Verteileinrichtung 10 sind jeweils mehrere Ausbringelemente 14a-14k an einer Trägerstruktur 34a-34d befestigt, wobei die Position der Trägerstrukturen 34a-34d mittels der Verstelleinrichtung 20 veränderbar ist. Konkret sind die Trägerstrukturen 34a-34d in den Verstellrichtungen 28a-28d quer zur Fahrtrichtung verschiebbar. Das Bewegen der Trägerstrukturen 34a-34d wird mittels entsprechender Aktoren des landwirtschaftlichen Verteileinrichtungs 10 umgesetzt.

Die Ausbringelemente 14a-14k sind als Verteildüsen ausgebildet. Die Trägerstrukturen 34a-34d sind als Düsenträgereinheiten ausgebildet. Die Ausbringelemente 14a-14k, welche jeweils an einer Trägerstruktur 34a-34d befestigt sind, weisen eine unveränderliche Relativposition zueinander auf. Da die Ausbringelemente 14a-14k unbeweglich an den jeweiligen Trägerstrukturen 34a-34d befestigt sind, ist trotz der Verschiebbarkeit der Trägerstrukturen 34a-34d in Querrichtung keine exakte Positionierung der Ausbringelemente 14a-14k oberhalb der Pflanzenreihen 26a-26k möglich. Damit die Ausbringung des granularen Materials trotzdem mit einem akzeptablen Reihenbezug erfolgt, ist die Steuerungseinrichtung dazu eingerichtet, die Verstelleinrichtung 20 derart zu steuern, dass der mittlere Abstand in horizontaler Richtung zwischen den erfassten Pflanzenreihen 26a-26k und den den Pflanzenreihen 26a-26k jeweils zugeordneten Ausbringelementen 14a-14k minimal ist. Somit wird auch die Summe der Abstände x1-x10 zwischen den erfassten Pflanzenreihen 26a-26k und den den Pflanzenreihen 26a-26k jeweils zugeordneten Ausbringelementen 14a-14k minimiert.

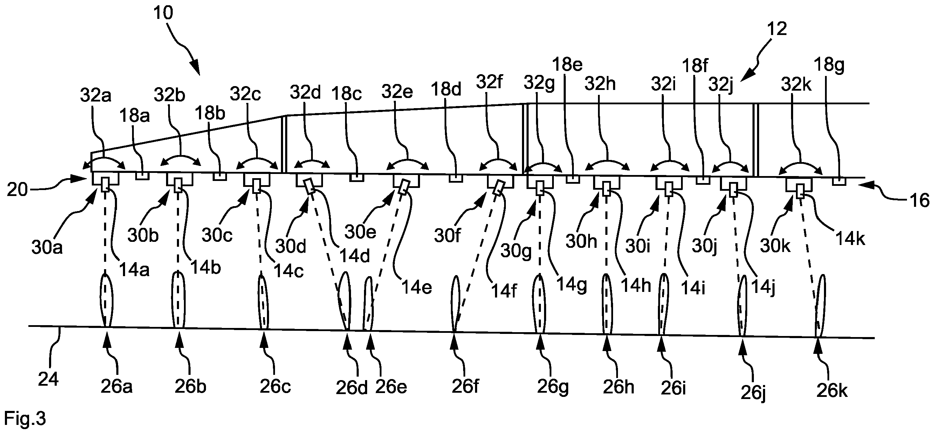

Die Fig. 3 zeigt ebenfalls einen Ausschnitt eines Verteilgestänges 12 einer landwirtschaftlichen Verteileinrichtung 10. Die Verstelleinrichtung 20 der dargestellten landwirtschaftlichen Verteileinrichtung 10 weist mehrere Schwenkeinrichtungen 30a-30k auf, mittels welchen jeweils die Neigung der Ausbringelemente 14a-14k an dem Verteilgestänge 12 veränderbar ist. Mittels der Schwenkeinrichtungen 30a-30k kann die Neigung der einzelnen Ausbringelemente 14a-14k unabhängig voneinander eingestellt werden. Die jeweiligen Schwenkeinrichtungen 30a-30k weisen Aktoren auf, mittels welchen die Ausbringelemente 14a-14k entlang der Schwenkrichtungen 32a-32k verschwenkbar sind.

Die Steuerungseinrichtung der landwirtschaftlichen Verteileinrichtung 10 ist in dem dargestellten Ausführungsbeispiel dazu eingerichtet, die Schwenkeinrichtungen 30a-30k derart zu steuern, dass die Ausbringelemente 14a-14k während des Ausbringvorgangs jeweils im Wesentlichen auf eine Pflanzenreihe 26a-26k ausgerichtet sind, so dass von ihnen verteiltes granulares Material im Bereich der Pflanzenreihen 26a-26k auftrifft.

Alternativ oder zusätzlich kann die Steuerungseinrichtung jedoch auch dazu eingerichtet sein, die Schwenkeinrichtungen 30a-30k derart zu steuern, dass die Ausbringelemente 14a-14k während des Ausbringvorgangs jeweils auf einen Bereich zwischen zwei Pflanzenreihen 26a-26k ausgerichtet sind.

Die in den Fig. 1 bis Fig. 3 dargestellten Verstellmöglichkeiten zum Verstellen des Auftreffbereichs AB des von den Ausbringelementen 14a-14k abgegebenen granularen Materials können auch miteinander kombiniert werden. So kann eine Verstelleinrichtung 20 neben Positioniereinrichtungen 22a-22d zur Längsverschiebung der Ausbringelemente 14a-14k in Querrichtung gleichzeitig auch Schwenkeinrichtungen 30a-30k aufweisen, mittels welchen die Neigung der Ausbringelemente 14a-14k während des Ausbringvorgangs veränderbar ist.

### Bezugszeichen

- 10: landwirtschaftliche Verteileinrichtung
- 12: Verteilgestänge
- 14a-14k: Ausbringelemente
- 16: Erfassungseinrichtung
- 18a-18j: Kameras
- 20: Verstelleinrichtung
- 22a-22d: Positioniereinrichtungen
- 24: landwirtschaftliche Nutzfläche
- 26a-26k: Pflanzenreihen
- 28a-28k: Verstellrichtungen
- 30a-30k: Schwenkeinrichtungen
- 32a-32k: Schwenkrichtungen
- 34a-34d: Trägerstruktur

- AB: Auftreffbereiche
- x1-x10: Abstände

## Patentansprüche

1. Landwirtschaftliche Verteileinrichtung (10), insbesondere Pneumatikstreuer, mit
- mehreren Ausbringelementen (14a-14k), welche an einem Verteilgestänge (12) angeordnet und dazu eingerichtet sind, granulares Material auf eine landwirtschaftliche Nutzfläche (24) auszubringen;
- einer Erfassungseinrichtung (16), welche dazu eingerichtet ist, Pflanzenreihen (26a-26k) auf der landwirtschaftlichen Nutzfläche (24) zu erfassen; und
- einer Verstelleinrichtung (20), mittels welcher der Auftreffbereich (AB) des von einer oder mehreren Ausbringelementen (14a-14k) abgegebenen granularen Materials auf der landwirtschaftlichen Nutzfläche (24) während des Ausbringvorgangs veränderbar ist;
**gekennzeichnet durch** eine Steuerungseinrichtung, welche dazu eingerichtet ist, die Verstelleinrichtung (20) in Abhängigkeit der durch die Erfassungseinrichtung (16) erfassten Pflanzenreihen (26a-26k) auf der landwirtschaftlichen Nutzfläche (24) während des Ausbringvorgangs zu steuern.

2. Landwirtschaftliche Verteileinrichtung (10) nach Anspruch 1,
**dadurch gekennzeichnet, dass** die Verstelleinrichtung (20) eine oder mehrere Positioniereinrichtungen (22a-22d) aufweist, mittels welchen jeweils die Position von einem oder mehreren Ausbringelementen (14a-14k) an dem Verteilgestänge (12) veränderbar ist.

3. Landwirtschaftliche Verteileinrichtung (10) nach Anspruch 2,
**dadurch gekennzeichnet, dass** die eine oder die mehreren Positioniereinrichtungen (22a-22d) jeweils einen Verschiebemechanismus aufweisen, mittels welchem das eine oder die mehreren Ausbringelemente (14a-14k) entlang des Verteilgestänges (12) verschiebbar sind.

4. Landwirtschaftliche Verteileinrichtung (10) nach Anspruch 2 oder 3,
**dadurch gekennzeichnet, dass** die Steuerungseinrichtung dazu eingerichtet ist, die eine oder die mehreren Positioniereinrichtungen (22a-22d) derart zu steuern, dass einzelne oder mehrere Ausbringelemente (14a-14k) während des Ausbringvorgangs jeweils im Wesentlichen vertikal oberhalb einer Pflanzenreihe (26a-26k) positioniert sind.

5. Landwirtschaftliche Verteileinrichtung (10) nach einem der vorstehenden Ansprüche,
**dadurch gekennzeichnet, dass** die Steuerungseinrichtung dazu eingerichtet ist, die Verstelleinrichtung (20) derart zu steuern, dass der mittlere Abstand in horizontaler Richtung zwischen den erfassten Pflanzenreihen (26a-26k) und den den Pflanzenreihen (26a-26k) jeweils zugeordneten Ausbringelementen (14a-14k) minimal ist.

6. Landwirtschaftliche Verteileinrichtung (10) nach einem der vorstehenden Ansprüche,
**dadurch gekennzeichnet, dass** die Verstelleinrichtung (20) eine oder mehrere Schwenkeinrichtungen (30a-30k) aufweist, mittels welchen jeweils die Neigung von einem oder mehreren Ausbringelementen (14a-14k) an dem Verteilgestänge (12) veränderbar ist.

7. Landwirtschaftliche Verteileinrichtung (10) nach Anspruch 6,
**dadurch gekennzeichnet, dass** die Steuerungseinrichtung dazu eingerichtet ist, die eine oder die mehreren Schwenkeinrichtungen (30a-30k) derart zu steuern, dass einzelne oder mehrere Ausbringelemente (14a-14k) während des Ausbringvorgangs jeweils im Wesentlichen auf eine Pflanzenreihe (26a-26k) ausgerichtet sind.

8. Landwirtschaftliche Verteileinrichtung (10) nach einem der vorstehenden Ansprüche,
**dadurch gekennzeichnet, dass** die Verstelleinrichtung (20) eine oder mehrere Verdreheinrichtungen aufweist, mittels welchen jeweils die Drehausrichtung von einem oder mehreren Ausbringelementen (14a-14k) an dem Verteilgestänge (12) veränderbar ist.

9. Landwirtschaftliche Verteileinrichtung (10) nach einem der vorstehenden Ansprüche,
**gekennzeichnet durch** mehrere mit dem Verteilgestänge (12) verbundene Trägerstrukturen (34a-34d), wobei an den Trägerstrukturen (34a-34d) jeweils mehrere Ausbringelemente (14a-14k) befestigt sind und die Position und/oder Neigung der Trägerstrukturen (34a-34d) mittels der Verstelleinrichtung (20) veränderbar ist.

10. Landwirtschaftliche Verteileinrichtung (10) nach einem der vorstehenden Ansprüche,
**dadurch gekennzeichnet, dass** mittels der Verstelleinrichtung (20) das Verteilmuster von einer oder mehreren Ausbringelementen (14a-14k) veränderbar ist.

11. Landwirtschaftliche Verteileinrichtung (10) einem der vorstehenden Ansprüche,
**dadurch gekennzeichnet, dass** die Erfassungseinrichtung (16) einen oder mehrere Sensoren und/oder eine oder mehrere Kameras (18a-18j) zum Erfassen von Pflanzenreihen (26a-26k) umfasst.

12. Verfahren zum Ausbringen von granularen Material auf einer landwirtschaftlichen Nutzfläche (24) mit einer landwirtschaftlichen Verteileinrichtung (10), insbesondere mit einem landwirtschaftlichen Pneumatikstreuer (10) nach einem der vorstehenden Ansprüche, mit den Schritten:
- Ausbringen von granularen Material auf eine landwirtschaftliche Nutzfläche (24) mittels mehrerer Ausbringelemente, welche an einem Verteilgestänge (12) angeordnet sind;
- Erfassen von Pflanzenreihen (26a-26k) auf der landwirtschaftlichen Nutzfläche (24) mittels einer Erfassungseinrichtung (16); und
- Verändern des Auftreffbereichs (AB) des von einer oder mehreren Ausbringelementen (14a-14k) abgegebenen granularen Materials auf die landwirtschaftliche Nutzfläche (24) während des Ausbringvorgangs mittels einer Verstelleinrichtung (20);
**gekennzeichnet durch** den Schritt:
- Steuern der Verstelleinrichtung (20) in Abhängigkeit der durch die Erfassungseinrichtung (16) erfassten Pflanzenreihen (26a-26k) auf der landwirtschaftlichen Nutzfläche (24) während des Ausbringvorgangs.

13. Verfahren nach Anspruch 12,
**dadurch gekennzeichnet, dass** das Verändern des Auftreffbereichs (AB) des von einer oder mehreren Ausbringelementen (14a-14k) abgegebenen granularen Materials auf die landwirtschaftliche Nutzfläche (24) während des Ausbringvorgangs zumindest einen der folgenden Schritte umfasst:
- Verändern der Position von einem oder mehreren Ausbringelementen (14a-14k) an dem Verteilgestänge (12);
- Verändern der Neigung von einem oder mehreren Ausbringelementen (14a-14k) an dem Verteilgestänge (12);
- Verändern der Drehausrichtung von einem oder mehreren Ausbringelementen (14a-14k) an dem Verteilgestänge (12);
- Verändern des Verteilmusters von einem oder mehreren Ausbringelementen (14a-14k).
